# EUROPÄISCHE PATENTSCHRIFT

(11) **EP 0 381 044 B1**
(45) Veröffentlichungstag und Bekanntmachung des Hinweises auf die Patenterteilung: **27.12.1995**
(21) Anmeldenummer: 90101457.1
(22) Anmeldetag: 25.01.1990
(51) Int. Cl.: B29C 71/04, B29C 59/12, H01T 19/04

(54) **Verfahren und Vorrichtung zur Oberflächenvorbehandlung von flächenhaften Körpern mit elektrischer Koronaentladung**
Method and apparatus for the surface pretreatment of flat-shaped articles by corona discharge
Procédé et dispositif pour prétraitement de surface d'objets plans par décharge corona électrique

(30) Priorität: 03.02.1989 DE 3903235
(43) Veröffentlichungstag der Anmeldung: 08.08.1990
(73) Patentinhaber: HOECHST AKTIENGESELLSCHAFT, 65926 Frankfurt am Main (DE)
(72) Erfinder: Dinter, Peter, D-6227 Oestrich-Winkel 3 (DE); Funke, Hermann, D-8262 Altötting (DE); Matschke, Klaus, Dr., D-8269 Burgkirchen (DE)

(56) Entgegenhaltungen:
- DE-A- 3 416 405
- DE-A- 3 705 482
- US-A- 3 057 792

## Beschreibung

Die Erfindung bezieht sich auf ein Verfahren zur Oberflächenvorbehandlung eines flächenhaften Körpers, insbesondere in Form von bahnförmigen oder plattenförmigen Substraten, mittels elektrischer Koronaentladung, die in einem Elektrodensystem zwischen Elektrode und Gegenelektrode abläuft, zwischen denen sich der Körper befindet, auf eine Vorrichtung zur Durchführung dieses Verfahrens, sowie auf flächenhafte Körper, die nach dem Verfahren bzw. mit dieser Vorrichtung vorbehandelt sind.

In vielen Fällen bereitet die normalerweise glatte Oberfläche von flächenhaften Kunststoffkörpern, insbesondere von Folien, insofern Schwierigkeiten, als die Folienbahnen mit extrem gutem Schlupf leicht dazu neigen, beim Aufrollen auf einen Wickel zu teleskopieren. Weitere Schwierigkeiten aufgrund der glatten Oberflächen von flächenhaften Kunststoffkörpern ergeben sich bei der Veredelung zur Steigerung der Adhäsion von Druckfarben, Lacken, Klebern, aufgedampften Metallen und dergleichen.

Viele Werkstoffe sind wegen ihrer chemischen Zusammensetzung für den elektrischen Strom nicht oder nur in praktisch nicht meßbarem Umfang leitfähig und gelten daher im allgemeinen als Isolatoren. Die geringe Leitfähigkeit dieser Werkstoffe ist jedoch die Ursache dafür, daß diese an ihrer Oberfläche oftmals sehr hohe elektrostatische Aufladungen ansammeln, die, insbesondere bei flächenhaften Polymererzeugnissen, wie Folien oder Platten, zu einer Vielzahl von nachteiligen Störungen, bis hin zur Unbrauchbarkeit des Erzeugnisses, führen können und die aus diesem Grund in hohem Maße unerwünscht sind. Die Aufladungen entstehen während der Produktion, Weiterverarbeitung oder dem Gebrauch der Folien oder Platten überall dort, wo sich Reibungsvorgänge an Kanten, Wendestangen usw. abspielen bzw. wo sich zwei Materialien berühren und anschließend wieder trennen (Trennvorgänge), z.B. an Rollen. Sie können zu Produktionsstörungen, Staubansammlungen, zur Beeinflussung von Meß- und Regelinstrumenten und sogar zu Explosionen führen. Große statische Aufladungen (mehr als 5000 V) können Gas/Luft-Gemische aus verdunstenden Lösungsmitteln entzünden, und kleine statische Aufladungen von weniger als 1000 V können die Oberfläche durch Bildung von Streifen, Staubflecken und Schmutzansammlungen optisch beeinflussen oder zerstören.

Die Größe der elektrostatischen Aufladung hängt von der elektrischen Leitfähigkeit der Stoffe ab. Gute Leiter sind z.B. Metalle, Ruß und Graphit, die ihre Aufladung sofort verlieren, während schlechte Leiter, insbesondere unbehandelte Polymere, ihre Ladung über längere Zeitspannen, nämlich Sekunden bis Minuten und sogar mehrere Tage, aufrechterhalten.

An Kunststoffteilen stört generell deren schlechte Antistatik. Elektrostatisch hochaufgeladene Kunststoffteile bereiten bei nachfolgenden Veredelungsschritten, wie z.B. Beschichten, Tiefziehen oder Bedrucken, ungeheuere Schwierigkeiten.

Um diese Nachteile zu überwinden, gehört es zum Stand der Technik, chemisch-physikalische Oberflächemodifizierungen von Kunststoffen vorzunehmen, insbesondere von Folien. Ein grundsätzliches Verfahren, das nur Veränderungen auf der Kunststoffoberfläche herbeiführt, besteht in einer Vorbehandlung der Kunststoffoberfläche durch eine elektrische Koronaentladung. So erfolgt nach der DE-A-32 47 795 eine Koronavorbehandlung einer Kunststoff-Folienbahn in der Weise, daß die Folienbahn auf der Oberseite und/oder der Unterseite einer Koronabeaufschlagung unterzogen wird, die unterschiedliche Vorbehandlungsintensitäten ergibt. Hierzu wird die zu behandelnde Folienbahn über eine elektrisch geerdete Walze geführt und die elektrische Ladung durch Beaufschlagen einer oder beider Seiten der Folienbahn mit einer elektrischen Koronaentladung vorgenommen, die durch das Anlegen eines hochfrequenten Wechselstroms hoher Spannung an eine im Abstand zur Walze angordnete Elektrode erzeugt wird. Die Vorbehandlung erfolgt im allgemeinen in Luft bei Atmosphärendruck.

Die ständig steigenden Forderungen des Marktes nach Produkten mit verbesserten Oberflächeneigenschaften führten auch zur Entwicklung von Verfahren unter Einsatz von chemisch reaktionsfähigen Substanzen, die beispielsweise bestimmte chemische Bindungen in der Oberfläche aufbrechen und dadurch die Oberflächeneigenschaften von Kunststoffen verändern.

In der DE-A-37 05 482 ist ein Verfahren zur chemisch-physikalischen Oberflächenvorbehandlung von Kunststoff-Formkörpern beschrieben, bei dem durch Einbeziehung von in Aerosole zerstäubten Flüssigkeiten in eine Wechselstrom-Coronaentladung gezielte Reaktionsmechanismen auf den behandelten Substraten ausgelöst werden. In der Vorrichtung wird das zu behandelnde Substrat durch einen Entladungsspalt hindurchgeführt, der durch eine auf Erdpotential liegende Walze mit dielektrischem Belag als Gegenelektrode sowie mit Hochspannung beaufschlagten Elektroden gebildet wird und in den aus einer separaten Zerstäubereinrichtung mittels eines Trägergases ein Aerosol geblasen wird.

Es ist ferner Stand der Technik, flächenhafte Substrate auf beiden Oberflächen einer Koronaentladung auszusetzen, um eine beidseitige Vorbehandlung zu erreichen. So beschreibt die DE-B-17 79 400 eine Elektrodenanordnung, wobei die zu behandelnde Folienbahn zwei Walzenelektroden S-förmig umschlingt. Diese Vorrichtung ist allerdings nicht geeignet, während der Koronaentladung auf beiden Oberflächen der Folie ein Aerosol einwirken zu lassen. Der unmittelbare Kontakt der zuerst behandelten, gegebenenfalls vom Aerosol noch feuchten Substratoberfläche mit der nachfolgenden Koronawalze kann zu einer Beschädigung der aufgebrachten Aerosolschicht führen, ferner besteht auch Gefahr, daß elektrische Durchschläge auftreten und das Substrat und eventuell auch die Elektrodenwalze zerstört werden. Die aus der GB-A-722,875 bekannte Vorrichtung zur beidseitigen Behandlung von Kunststoffilmen mit Koronaentladung ist zwar zur unmittelbar gleichzeitigen Koronabehandlung eines bahnförmigen Substrats geeignet, sie schließt aber durch ihre kompakte, geschlossene Bauweise die gezielte Einspeisung eines Aerosols in den Entladungsspalt aus.

Aufgabe der Erfindung ist es, das Verfahren und die Vorrichtung, wie sie in der DE-A-37 05 482 beschrieben sind, so zu gestalten, daß flächenförmige Körper auf beiden Oberflächen mit reaktiven Substanzen in flüssiger Form vorbehandelt werden können, wobei diese Substanzen zugleich auch als spezielle Schichten zum Veredeln der Oberflächen der Formmaterialien auf diese appliziert werden können.

Diese Aufgabe wird erfindungsgemäß durch das Verfahren und die Anordnung mit den in Anspruch 1 bzw. Anspruch 10 genannten Merkmalen gelöst.

Die weitere Ausgestaltung des Verfahrens bzw. der Anordnung ergibt sich aus den abhängigen Ansprüchen.

Das Verfahren dient zur Vorbehandlung der Oberfläche von bahn- oder plattenförmigen Substraten mittels elektrischer Koronaentladung. Die Vorbehandlung erfolgt gleichzeitig auf beiden Oberflächen des Substrats. Die Koronaentladung erfolgt zwischen spannungsführenden Elektroden und geerdeten Gegenelektroden, die gemeinsam die Koronaentladungszone bilden. Elektroden und Gegenelektroden sind jeweils etwa im gleichen Abstand zueinander angeordnet, wobei dieser gegenseitige Abstand über die gesamte Breite der zu behandelnden Folie so weit wie möglich konstant sein muß. Elektroden und Gegenelektroden bilden einen Spaltraum, durch den das flächenhafte Substrat, ohne die Elektroden und Gegenelektroden zu berühren, vorzugsweise mittig, hindurchgeführt wird. Bei der Behandlung von elektrisch nichtleitfähigen Substraten ist die Oberfläche der geerdeten Gegenelektrode, bei der Behandlung elektrisch leitfähiger Substrate ist die Oberfläche der spannungsführenden Elektrode zur elektrischen Isolierung mit einem dielektrischen Material umgeben.

Mit der Koronaentladung läßt man möglichst gleichzeitig auf beide Oberflächen des Substrats ein schwebfähiges Aerosol aus zerstäubten Flüssigkeitströpfchen einwirken, welches mit einem Trägergas von einer geeigneten Zerstäubereinrichtung herbeigeführt wird. Um die gleichzeitige Einwirkung von Coronaentladung und Aerosolbeaufschlagung zu gewährleisten, soll der Abstand zwischen der Breitschlitzdüse für das Aerosol und der Elektrode bzw. Gegenelektrode möglichst gering sein und möglichst 80, insbesondere 60 mm nicht überschreiten.

In bevorzugter Ausführungsform besteht die zerstäubte Flüssigkeit aus Tröpfchen mit einer mittleren, d.h. häufigsten Größe von kleiner als 20, vorzugsweise kleiner als 10, insbesondere kleiner als 5 Mikrometer. Mit Ultraschallschwingsystemen erzeugte Aerosole zeigen relativ kleine Flüssigkeitströpfchen, vorzugsweise im Bereich von 2 bis 10 Mikrometer. Die mittlere Tropfengröße des Aerosols ist der mittlere Tropfendurchmesser. Er ergibt sich aus der Bestimmung der Tropfengrößenverteilung, wie sie in Chem.-Ing.Techn. 58 (1986), S. 895-897, VCH Verlagsgesellschaft, Weinheim, beschrieben ist. Als Trägergas kommen neben Luft und Stickstoff verschiedene Edelgase in Betracht. Es transportiert das Aerosol über längere Wege bis zu seinem Einsatzort.

Die Anordnung zur Durchführung dieses Verfahrens umfaßt eine Koronaentladungseinrichtung, bestehend aus spannungsführenden Elektroden, einem Generator, mit dem die Elektroden bei der Verfahrensausübung mit einem hochfrequenten Wechselstrom hoher Spannung beaufschlagt werden, sowie im Abstand zu den Elektroden angeordnete Gegenelektroden, die geerdet sind. Die Elektroden bilden zusammen mit den gegenüberliegenden Gegenelektroden einen Spaltraum, dessen Höhe größer ist als die Dicke des zu behandelnden Substrats, so daß dieses berührungsfrei an den Elektroden und Gegenelektroden vorbeigeführt werden kann. Weitere Bestandteile der Anordnung sind eine Zerstäubereinrichtung zum Zerstäuben von Flüssigkeit zu kleinen Flüssigkeitströpfchen in Form eines schwebfähigen Aerosols und ein Gebläse, mit dem während der Verfahrensdurchführung das Trägergas in regulierbarer Menge in die Zerstäubereinrichtung eingeblasen und von dort als Trägergas/Aerosolgemisch über eine Transportleitung zur Koronaentladungszone geführt wird, wo es auf beide Substratoberflächen einwirkt.

In bevorzugter Ausführungsform besteht die Zerstäubereinrichtung aus einem piezoelektrisch arbeitenden Ultraschallschwingsystem bzw. weist die Zerstäubereinrichtung mit Schallgeschwindigkeit arbeitende Zweistoff-Zerstäuberdüsen auf. Piezoelektrisch arbeitende Ultraschallschwingsysteme nutzen den inversen Piezoeffekt aus, d.h. sie wandeln elektrische Energie in mechanische Verzerrungsenergie um, die zur Vernebelung von Flüssigkeit unter Bildung eines Aerosols führt. Hierbei werden an der Grenzschicht zwischen Flüssigkeit und Gas Kapillarwellen ausgebildet, die sie mit zunehmender Ultraschallamplitude aufstellen und Tröpfchen abschnüren. Die maximale Betriebstemperatur für diese Systeme liegt bei etwa 120 bis 130°C. Zur Erleichterung der Zerstäubung ist es gegebenenfalls zweckmäßig, die Temperatur der Flüssigkeit und/oder des Trägergases zu erhöhen. Schwer zerstäubbare Substanzen werden in Mischung mit einer Flüssigkeit als Trägersubstanz in ein Aerosol überführt. Die auf die Substratoberflächen aufgebrachte Aerosolmenge läßt sich durch eine längere Verweilzeit des Substrats in der Koronaentladungszone steigern. Eine weitere Erhöhung wird durch die Verwendung mehrerer Zerstäubereinrichtungen und/oder Spannungserhöhung erzielt.

Für die Ableitung der bei der Coronaentladung entstehenden Wärme ist es zweckmäßig, die Elektroden innerlich und/oder äußerlich mit einem geeigneten Medium zu kühlen. Dabei ist das vorzugsweise gasförmige Kühlmedium, z. B. Luft, so zu führen, daß Abscheidung von Aerosol an den Elektroden unterbunden wird.

Durch die Koronaentladung werden Reaktionsmechanismen ausgelöst, die eine chemische Oberflächenmodifizierung des behandelten Formkörpers bewirken. Je nach Art der eingesetzten Aerosolflüssigkeit und des Trägergases für das Aerosol werden in der behandelten Oberfläche des Formkörpers aktive Zentren in Form funktioneller Gruppen und Radikalen erzeugt, die Reaktionspartner für nach der Koronaentladung aufgebrachte Substanzen darstellen. Je nach Art der verwendeten Aerosole und Trägergase lassen sich so auf der Oberfläche auch polymerisierbare bzw. vernetzende Schichten in einem einzelnen Verfahrensschritt aufbringen. Hierzu reichen in vielen Fällen extrem dünne Schichten aus, um die Oberflächeneigenschaften, wie z.B. Antistatik, Abriebfestigkeit, Gleiteigenschaften, Barriereverhalten, Adhäsion, eines bahn- oder plattenförmigen Substrats in gewünschter Weise zu verändern. Geeignete Aerosole sind z.B. in der DE-A-37 05 482 beschrieben.

Einzelheiten des Verfahrens nach der Erfindung sowie von Ausführungsbeispielen der erfindungsgemäßen Vorrichtung werden im folgenden anhand der Zeichnungen näher erläutert.

Es zeigen:
- Figur 1: eine schematische Ansicht einer nicht erfindungsgemäßen Anordnung zur beidseitigen Oberflächenvorbehandlung von senkrecht nach oben geführten Formkörpern mittels einer elektrischen Koronaentladung,
- Figur 2: eine schematische Ansicht einer erfindungsgemäßen Anordnung mit einer Koronaentladungseinrichtung, angeordnet am Austrittsspalt von zwei Breitschlitz-Luftdüsen zur beidseitigen Oberflächenvorbehandlung eines senkrecht nach oben geführten flächenhaften Substrats,
- Figur 3: eine schematische Ansicht einer weiteren erfindungsgemäßen Anordnung zur beidseitigen Oberflächenvorbehandlung von senkrecht nach unten geführten Formkörpern mit zwei Koronaentladungseinrichtungen,
- Figur 4: einen Querschnitt durch den Austrittsbereich einer zweckmäßigen Ausführungsform der in Fig. 2 gezeigten Düse 11,
- Figur 5: einen Querschnitt durch den Austrittsbereich einer zweckmäßigen Ausführungsform der in Fig. 2 gezeigten Düse 11'.

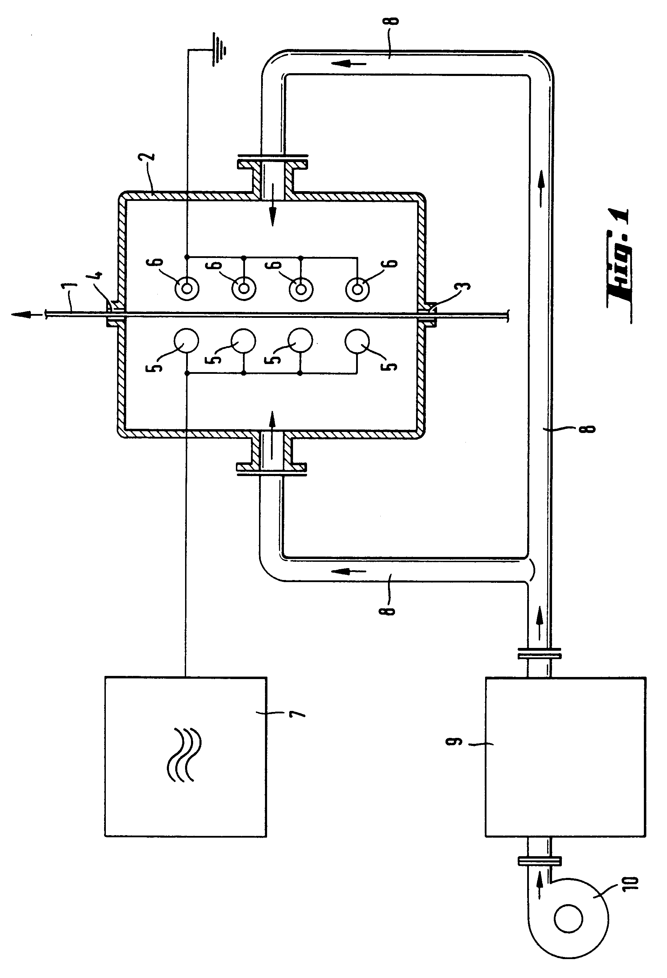

Die Anordnung der nicht erfindungsgemäßen Fig. 1 besteht aus einem Gehäuse oder einer Kammer 2 mit einem Eintrittsspalt 3 und einem Austrittsspalt 4, durch die ein bahn- oder plattenförmiges Substrat 1, z.B. eine PVC-Folie mit einer Dicke von 100 »m, mit einer Geschwindigkeit von beispielsweise 60 m/min, geradlinig in Pfeilrichtung senkrecht nach oben transportiert wird. Zur erleichterten und problemlosen Einführung des Substrats 1 in das Gehäuse 2 zu Beginn des Verfahrens besitzt das Gehäuse 2 nicht dargestellte mechanische Elemente zum Öffnen bzw. Aufklappen des Gehäuses 2.
Im Gehäuse 2 sind die metallischen Elektroden 5 und die geerdeten, mit dielektrischem Material, z.B. aus Keramik, ummantelten Gegenelektroden 6 im gleichförmigen Abstand zueinander angeordnet und bilden einen durchgängigen, freien Spalt, durch den das Substrat 1 frei geführt wird. Das Gehäuse 2 schirmt die Elektroden 5 und die Gegenelektroden 6 gegenüber der Umgebung ab.

In einer Abwandlung der Ausführungsform der Fig. 1 wechseln auf jeder Seite des Substrats Elektroden und Gegenelektroden alternierend miteinander ab.

Bezüglich der günstigsten Elektrodenkonfiguration sollten Systeme mit großem freien Querschnitt bevorzugt werden, die dem Durchtritt des Aerosols in die Koronaentladungszone nicht hinderlich entgegenstehen. Drähte, Stege, Kämme, Messer oder zylinderförmige Rollen erfüllen diese Forderung ausreichend. Der gegenseitige Abstand der Elektroden 5 bzw. der Gegenelektroden 6 sollte mindestens 5, insbesondere 10 mm betragen, um einen ausreichend leichten Zutritt des Aerosols zum Substrat zu ermöglichen.

Der Abstand der Elektroden 5 zu den gegenüberliegenden Gegenelektroden 6, d.h. senkrecht zur Ebene der Substratbahn, beträgt gewöhnlich bei der Behandlung von Folien 1,5 bis 3 mm. Durch diesen Elektrodenspalt wird das Substrat 1 mittig hindurchbewegt.

Um eine Berührung zwischen der Folie und Elektrode bzw. Gegenelektrode sicher zu vermeiden, ist es zweckmäßig, den gegenseitigen Abstand zwischen Elektroden und Gegenelektroden möglichst groß zu halten. Im Einzelfall wird man deshalb diesen Abstand bis auf 7 bis 10 mm vergrößern. Dann muß allerdings auch die elektrische Energie (höhere Generatorleistung) entsprechend erhöht werden, um eine ausreichende Coronaentladung zu gewährleisten.

Beaufschlagt wird das Elektrodensystem von einem Generator 7 mit einem hochfrequenten Wechselstrom hoher Spannung. Es sind ausnahmslos alle handelsüblichen Koronageneratoren einsetzbar, die üblicherweise in einem Frequenzbereich von 3 bis 100 kHz und mit einer Spannung von 5 bis 20 kV arbeiten.

Über ein starres Rohrleitungssystem, eine Schlauchleitung oder sonstige flexible Leitung 8 steht die Behandlungskammer 2 mit der Zerstäubereinrichtung 9 in Verbindung. Die Zerstäubereinrichtung 9 dient der Zerstäubung der jeweiligen Flüssigkeit in ein schwebfähiges Aerosol, das mittels eines von einem in der Durchsatzmenge regulierbaren Gebläse 10 gelieferten Trägergas- oder Luftstromes in die Behandlungskammer 2 eingeblasen wird. Als Zerstäuber kommen Zweistoffzerstäuberdüsen, bei denen die Flüssigkeit durch mit Schallgeschwindigkeit austretende Luft in winzige Tröpfchen zerrissen wird, und piezoelektrische Ultraschallschwingsysteme zum Einsatz, die durch ihre Schwingungen die Flüssigkeit in entsprechende Schwingungen versetzen und sie in winzige Tropfen zerreißen. Das in das Gehäuse 2 der Koronaentladungseinrichtung eingebrachte bzw. eingeblasene Aerosol verteilt sich gleichmäßig im Inneren des Gehäuses 2 und wandert entlang den Feldlinien, die von den Elektroden 5 und Gegenelektroden 6 in Richtung des Substrats 1 verlaufen, auf die Substratoberflächen und wird dort niedergeschlagen. Es ergibt sich dadurch eine sehr gleichmäßige beidseitige Benetzung bzw. Beschichtung des Substrats 1 mit dem Aerosol, wodurch eine sehr gleichmäßige Modifizierung der Oberflächeneigenschaften des Substrats erfolgt.

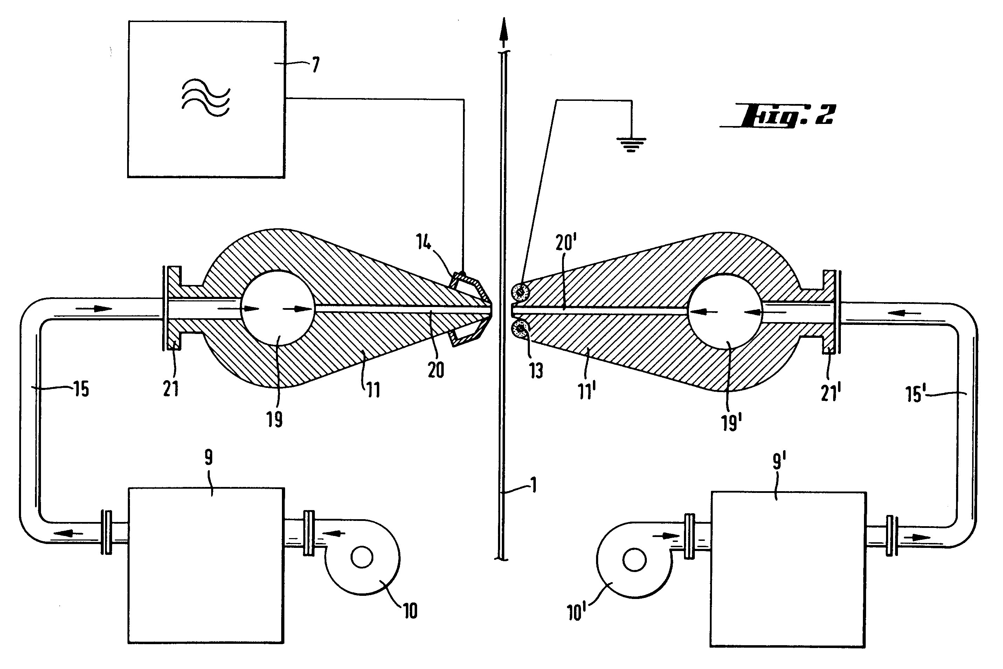

Von der Version gemäß Figur 1 hebt sich die Anordnung der Figur 2 dadurch ab, daß die Behandlung zwischen zwei sich gegenüberliegenden, auf jeder Seite des zu behandelnden in Pfeilrichtung nach oben bewegten Substrats 1 angeordneten Breitschlitzdüsen 11 bzw. 11′ stattfindet. Ihr konstruktiver Aufbau stimmt weitgehendst mit dem herkömmlicher Luftmesser oder Luftbürsten überein, wie sie zum Abrakeln und Vergleichmäßigen von flüssigen Überzügen auf Filmen bekannt sind. Sie enthalten zur gleichmäßigen Druckverteilung des Gemisches aus Aerosol und Trägergas einen hohlen, rohrförmigen Druckraum 19, 19′ mit kreisförmigen Querschnitt, der sich über die gesamte Breite des Substrats erstreckt, sowie einen vom Druckraum auf das Substrat 1 gerichteten Austrittsspalt 20, 20′.

An den Düsenlippen, die den Austrittsspalt der Düse 11′ begrenzen, sind geerdete, mit einem dielektrischen Material ummantelte Gegenelektroden 13 in Form von Metalldrähten, die in Quarzglasrohre eingezogen oder eingeschmolzen sind, positioniert, während die Düsenlippen der Düse 11 mit hochspannungsführenden Elektroden 14 in Gestalt von metallischen Flachprofilen ausgerüstet sind. Die Elektroden 14 bilden integrale Bestandteile der Luftdüse 11 und befinden sich unmittelbar neben dem Austrittsspalt 20. Sie werden von einem Generator 7 mit einem hochfrequenten Wechselstrom hoher Spannung beaufschlagt. Dadurch wird zwischen den Elektroden 14 und den geerdeten Gegenelektroden 13 eine elektrische Koronaentladung gezündet, durch deren Feldlinien die Substratbahn 1 hindurchgeführt wird.

Über schematisch dargestellte Rohr- oder Schlauchleitungen 15 und 15′, die an einem Flansch 21, 21′ befestigt sind, stehen die Düsen 11 und 11′ mit Zerstäubereinrichtungen 9 und 9′ in Verbindung, aus denen sie mittels der regulierbaren Gebläse 10 und 10′ mit Aerosolen beaufschlagt werden. Die aus den Luftdüsen 11, 11′ austretenden Aerosole gelangen direkt in das Feld der Koronaentladung. Infolge des an den Elektroden 14 anliegenden elektrischen Feldes werden die Aerosoltröpfchen im elektrischen Feld gehalten und an einem unkontrollierten Vagabundieren in die Umgebung gehindert, was sich sowohl in einer nochmals verbesserten Vergleichmäßigung der auf die beiden Substratoberflächen aufgebrachten Schichten als auch in einer weitgehend verlustfreien Nutzung der angebotenen Aerosolmenge niederschlägt.

Dieser Aufbau gestattet die gleichzeitig beidseitige Oberflächenmodifizierung des Substrats 1 mit gleichartigen oder unterschiedlichen Aerosolen. Der Vorteil der Elektrodenfunktion erfüllenden Breitschlitzdüsen liegt in ihrer aerodynamischen Auslegung in der Art von Luftmessern begründet, die eine gleichmäßige Aerosolbeaufschlagung der Substratbahn unabhängig von ihrer Breite sicherstellt. Besonders vorteilhaft für eine mittige Führung der Substratbahn durch den Elektrodenspalt ist die direkte Gegenüberstellung der beiden Düsen 11 und 11′. Die aus den beiden Düsen austretenden Luftstrahlen sorgen infolge ihrer Tragewirkung bereits für eine stabile mittige Bahnführung. Diese erfährt aber noch eine deutliche Verbesserung durch die auf die Substratbahn einwirkende Kraft des zwischen den Elektrodenpaaren befindlichen elektrischen Feldes.

In einer gegenüber der Figur 2 abgewandelten Elektrodenanordnung befindet sich auf jeder Seite des Substrates, respektive an jeder Düse, sowohl eine hochspannungsführende Elektrode als auch eine geerdete Gegenelektrode.

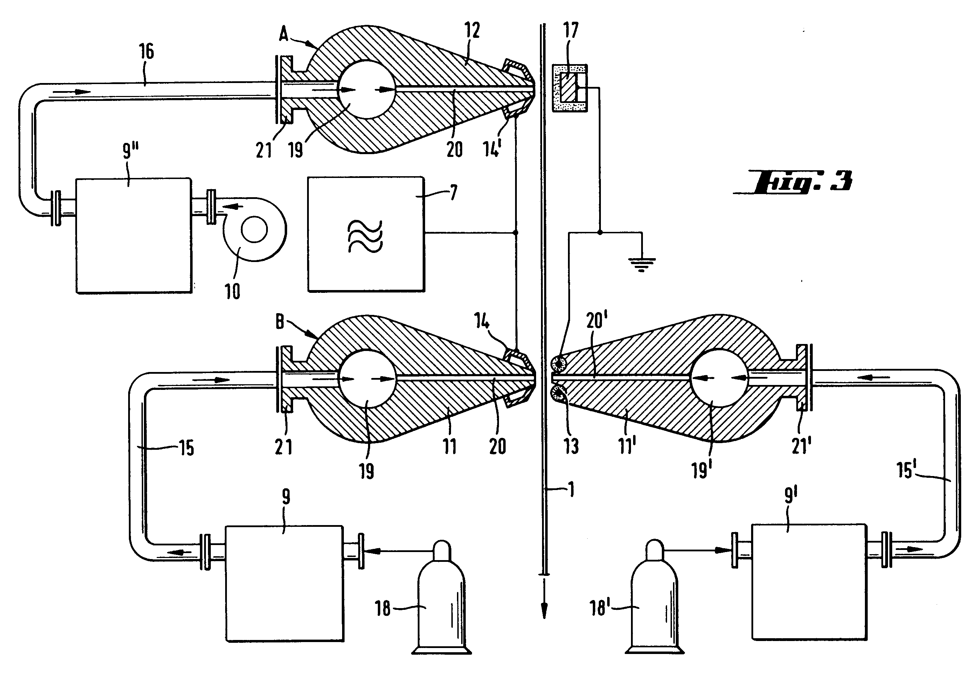

Wesentliches Merkmal der in Figur 3 gezeigten Ausführungsvariante ist die beidseitige Mehrfachbehandlung eines bahn- oder plattenförmigen Substrats in Folgeschritten, wobei sowohl unterschiedliche Flüssigkeiten bzw. deren Aerosole zum Einsatz gelangen als auch verschiedene Applikationsmethoden verwendet werden. Das Substrat 1 durchläuft hierbei in Pfeilrichtung nach unten die Entladungszonen bzw. -spalte zweier hintereinander geschalteter Vorbehandlungsstationen (A) und (B), die beide aus mit hochspannungsführenden Elektroden 14 und 14′ bestückten Breitschlitzdüsen 11 und 12 sowie den dazu auf Abstand angeordneten, geerdeten, mit einem dielektrischen Material ummantelten Gegenelektroden 13 und 17 bestehen. Von dem Generator 7 werden die Elektroden 14, 14′ mit einem hochfrequenten Wechselstrom hoher Spannung beaufschlagt. Während Station (A) nur eine einseitige Aerosolapplikation zuläßt, erlaubt die Station (B) aufgrund der zusätzlichen Breitschlitzdüse 11′ mit der Gegenelektrode 13 eine gleichzeitig beidseitige Oberflächenmodifizierung des Substrates. Infolge des an den Elektroden 14, 14′ anliegenden elektrischen Feldes werden die Aerosoltröpfchen im elektrischen Feld gehalten und an einem unkontrollierten Vagabundieren in die Umgebung gehindert, was sich sowohl in einer nochmals verbesserten Vergleichmäßigung der auf die Substratoberflächen aufgebrachten Schichten als auch in einer weitgehend verlustfreien Nutzung der angebotenen Aerosolmenge bemerkbar macht.

Die in der Station (A) zwangsläufig auch durchgeführte Koronabehandlung der der Gegenelektrode 17 zugewandten Oberfläche des Substrats 1 kann als zusätzliche Oberflächenaktivierung vor der nachfolgenden Aerosolapplikation in der Station (B) genutzt werden.

Über schematisch gezeichnete Rohr- oder Schlauchleitungen 15, 15′, 16 stehen die Breitschlitzdüsen 11, 11′, 12 mit den dazugehörigen Zerstäubereinrichtungen 9, 9′, 9˝ in Verbindung. Während das in der Zerstäubereinrichtung 9˝ erzeugte Aerosol mittels eines drehzahlregulierbaren Gebläses 10 mit Luft als Trägermedium in die Breitschlitzdüse 12 transportiert wird, erfüllen diese Aufgabe in den Zerstäubereinrichtungen 9 und 9′ speziell auf den Vorbehandlungsprozeß abgestimmte, reaktive Trägergase, die aus den Gasflaschen 18 und 18′ eingespeist werden.

Letztere vorteilhafte Prozeßvariante verdeutlicht, daß das erfindungsgemäße Verfahren mit der Kombination von flüssigen und gasförmigen Reaktionspartnern vielfältigste Möglichkeiten zur beidseitigen Oberflächenmodifizierung zuläßt. Je nach Art der verwendeten Substanzen lassen sich so auf beide Substratoberflächen auch polymerisierbare bzw. vernetzende Schichten aufbringen. Aus Sicherheitsgründen ist es zweckmäßig, die in Fig. 2 und 3 gezeigten Koronabehandlungszonen in analoger Weise wie in Fig. 1 durch ein Gehäuse von der Umgebung abzuschirmen. Ferner ist darauf hinzweisen, daß die in den Figuren gezeigte senkrechte Substratfortbewegung zwar bevorzugt ist, daß sich das erfindungsgemäße Verfahren aber auch mit horizontaler Substratbewegung ausführen läßt.

Obwohl die in den Figuren 1 bis 3 gezeigten Vorrichtungen, in Anbetracht der Polung der Elektroden, ausschließlich zur Oberflächenmodifizierung elektrisch nicht leitfähiger Substrate, wie z.B. Kunststoffolien, Papier, Textilgeweben oder -gewirken vorgesehen sind, können mit ihnen auch elektrisch leitfähige Substrate, wie z.B. reine Metallfolien, metallisierte Kunststoffilme, mit leitfähigen Druckfarben teil- oder vollflächig bedruckte Kunststoffolien oder Papier, metallisierte Textilgewebe oder -gewirke, leitfähige Textilfasern, wie z.B. Kohlenstoffasern etc. behandelt werden. Einzige Voraussetzung hierfür ist eine Umpolung des Elektrodensystemes, d.h. die Hochspannung muß von den metallischen Elektroden 14 bzw. 14′ auf die isolierten Elektroden 13 und 17 gelegt werden. Das bedeutet, daß die isolierten Elektroden 13 und 17 zu spannungsführenden Elektroden werden, während die metallischen Elektroden 14 und 14′ die geerdeten Gegenelektroden bilden. Diese Maßnahme ist absolut zwingend, da ansonsten über das leitfähige Aerosol Strom abfließt und dadurch das für die Koronaentladung notwendige elektrische Feld nicht aufgebaut werden kann. Im Prinzip ist es auch möglich, die Umpolung nicht vorzunehmen. Dann müssen allerdings die metallischen Elektroden 14 bzw. 14′ mit einer elektrischen Isolierung aus dielektrischem Material versehen werden. Diese Anordnung gestattet auch die Vorbehandlung elektrisch nicht leitender Substrate.

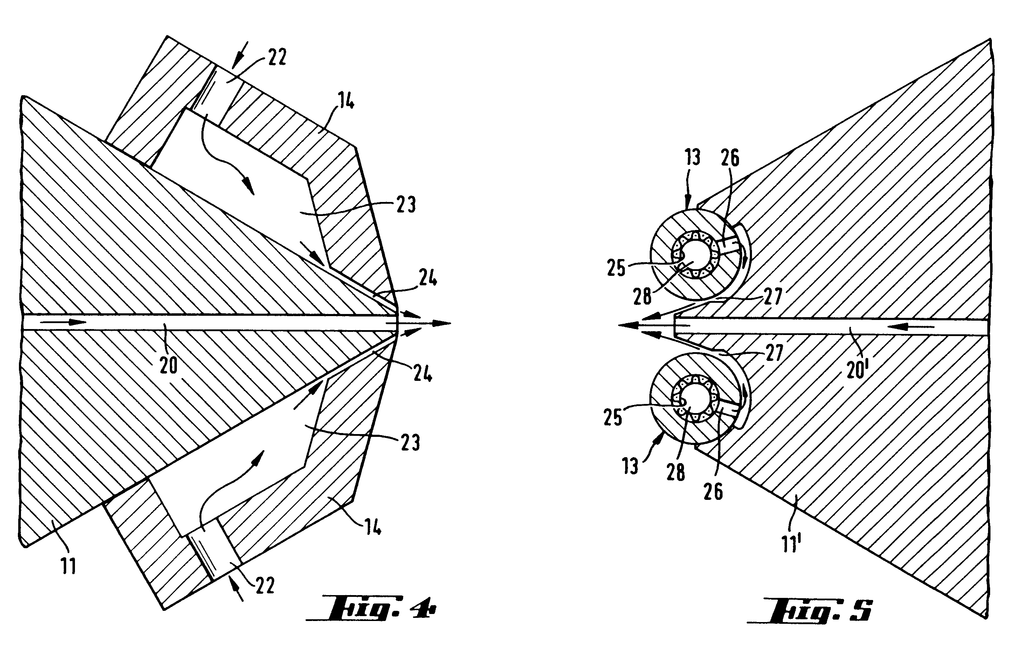

Figur 4 zeigt einen Querschnitt durch den Austrittsbereich einer zweckmäßigen Ausführungsform der erfindungsgemäßen Düse 11. An dieser sind im Bereich der Düsenlippen zwei hochspannungsführende Elektroden 14 aus Metall in Form von Hohlprofilen mit nicht dargestellten Befestigungselementen wie z. B. Schrauben befestigt. Über die Einlaßöffnungen 22 können die Staukanäle 23 der Hohlprofilelektroden 14 mit einem gasförmigen Medium (Luft, Gase) beaufschlagt werden. Dieses Medium strömt über die Düsenspalte 24 in den Koronaentladungsbereich aus. Es wirkt als Kühlmittel zur Abfuhr der bei der Entladung entstehenden wärme als auch als Sperrmedium für das aus dem Spalt 20 austretende Aerosol.

Figur 5 zeigt einen Querschnitt durch den Austrittsbereich einer zweckmäßigen Ausführungsform der Düse 11′. Im Lippenbereich dieser Düse 11′ sind zwei geerdete, aus dielektrischem Material wie Glas oder Keramik bestehende Gegenelektroden 13 in Form von Hohlrohren befestigt und bilden mit der Düse 11′ die Luftspalte 27. Die mit Perforationsbohrungen 26 ausgestatteten Hohlprofilelektroden 13 sind z. B. mit einem zusammengerollten, durchlässigen Maschengewebe 25 aus Metall als Masseelektrode bestückt. Über die axialen Einlaßbohrungen 28 lassen sich die Hohlprofilelektroden 13 mit Luft oder Gas beaufschlagen, das aus den Bohrungen 26 in den Spalt 27 und anschließend in den Koronaentladungsbereich als Sperrmedium gegenüber dem Aerosol gelangt.

Neben den dargestellten Elektrodenkonstruktionen sind auch solche Versionen denkbar, bei denen die Elektroden aus entsprechenden Sinterwerkstoffen gefertigt sind, so daß ein Herausströmen der zur Kühlung vorgesehenen Luft aus den Poren des Sinterwerkstoffs möglich ist.

Das vorliegende erfindungsgemäße Verfahren zur gleichzeitig beidseitigen Modifizierung von Substratoberflächen mittels elektrischer Koronaentladung erweitert durch die Einbeziehung von Flüssigkeiten, speziell in Form von Aerosolen, in den Entladungsprozeß die Möglichkeiten der chemischen Veränderung von Oberflächen erheblich. Je nach Art der verwendeten Flüssigkeiten und Trägergase für den Aerosoltransport können auf die nachfolgenden Veredelungsschritte exakt abgestimmte Oberflächenmodifizierungen eingestellt bzw. eigenständige Funktionsschichten auf dem behandelten Substrat appliziert werden. Der gleichzeitig beidseitig durchzuführende Behandlungsvorgang reduziert einerseits den verfahrenstechnischen Aufwand und damit die Kosten und ermöglicht andererseits durch Vermeidung von Kontakten des Substrates mit irgendwelchen mechanischen Träger- oder Führungselementen wie z.B. Walzen, Rollen, Schienen etc. auf einfache Weise auch die Behandlung empfindlicher Materialien.

## Patentansprüche

1. Verfahren zur Oberflächenvorbehandlung eines bahn- oder plattenförmigen Substrats (1) mittels elektrischer Koronaentladung, die in der zwischen spannungsführenden Elektroden (5 oder 14) und geerdeter Gegenelektrode (6 oder 13) liegenden Koronaentladungszone abläuft, durch die das Substrat hindurchläuft, wobei ein Aerosol durch Zerstäubung einer Flüssigkeit erzeugt wird und in die Koronaentladungszone mittels eines Luft- oder Gasstroms (8 oder 15) eingebracht wird, dadurch gekennzeichnet, daß das über eine Breitschlitzdüse eingebrachte Aerosol auf den einander gegenüberliegenden Oberflächen des Substrats im Bereich der Koronaentladungszone vorhanden ist und die Oberflächenbehandlung des Substrats durch Koronaentladung gleichzeitig beidseitig erfolgt und der Abstand zwischen der Breitschlitzdüse und der Elektrode bzw. Gegenelektrode 80 mm nicht überschreitet, wodurch die Koronaentladung gleichzeitig mit der Aerosolbeaufschlagung stattfindet.

2. Verfahren nach Anspruch 1, dadurch gekennzeichnet, daß mehrere Elektroden und Gegenelektroden vorhanden sind und das eingebrachte Aerosol entlang den Feldlinien wandert, die von den Elektroden und Gegenelektroden in Richtung des Substrats verlaufen, und das Aerosol auf beiden Oberflächen des Substrats niedergeschlagen wird.

3. Verfahren nach Anspruch 1, dadurch gekennzeichnet, daß die Elektrode und die Gegenelektrode integraler Bestandteil der Düsen sind.

4. Verfahren nach Anspruch 3, dadurch gekennzeichnet, daß die aus der Düse austretenden Aerosole direkt in das Feld der Koronaentladung gelangen und in diesem Feld gehalten werden.

5. Verfahren nach Anspruch 1 bis 4, dadurch gekennzeichnet, daß die zerstäubte Flüssigkeit aus Tröpfchen mit einer mittleren Größe von kleiner als 5, insbesondere kleiner als 3 Mikrometer, besteht, welche vorzugsweise durch Zerstäubung der Flüssigkeit mit Ultraschall erzeugt worden sind.

6. Verfahren nach Anspruch 1 bis 5, dadurch gekennzeichnet, daß gleichzeitig auf die gegenüberliegenden Oberflächen des zu behandelnden Substrats im Bereich der Koronaentladungszone unterschiedliche Aerosole geblasen werden, die aus der Zerstäubung verschiedener Flüssigkeiten, vorzugsweise mittels Ultraschallzerstäubung, resultieren.

7. Verfahren nach einem der Ansprüche 1 bis 6, dadurch gekennzeichnet, daß wenigstens eine der zu behandelnden Oberflächen des Substrats mehreren Koronaentladungen in Folge ausgesetzt wird, wobei in die Koronaentladungszonen gleiche oder unterschiedliche Aerosole (15 und 16) eingeblasen werden, die vorzugsweise aus der Ultraschallzerstäubung von Flüssigkeiten resultieren.

8. Verfahren nach einem der Ansprüche 1 bis 7, dadurch gekennzeichnet, daß zum Transport des Aerosols in die Koronaentladungszone Luft und/oder Gase oder Gasgemische verwendet werden.

9. Verfahren nach einem der Ansprüche 1 bis 8, dadurch gekennzeichnet, daß die Koronaelektroden (5 oder 14) mit einem hochfrequenten Wechselstrom von 0,1 bis 10 A bei einer Spannung von 5 bis 100 kV, vorzugsweise 5 bis 30 kV und einer Frequenz von 3 bis 100 kHz, vorzugsweise 8 bis 32 kHz gespeist werden.

10. Anordnung zur Oberflächenvorbehandlung eines platten- oder bahnförmigen Substrats mittels elektrischer Koronaentladung, umfassend eine Koronaentladungseinrichtung, bestehend aus einem Generator (7), Elektroden (5 oder 14), die vom Generator (7) mit einem hochfrequenten Wechselstrom hoher Spannung beaufschlagbar sind, sowie im Abstand zu den Elektroden angeordneten, geerdeten Gegenelektroden (6 oder 13), eine Zerstäubereinrichtung (9) zum Zerstäuben von Flüssigkeit zu einem schwebfähigen Aerosol, die über eine Transportleitung (8 oder 15) für das Aerosol mit der Koronaentladungseinrichtung verbunden ist, und ein in der Durchsatzmenge regulierbares Gebläse (10), welches an die Zerstäubereinrichtung (9) angeschlossen ist und das Trägergas für das Aerosol durch die Zerstäubereinrichtung (9) und die Transportleitung (8 oder 15) zur Koronaentladungseinrichtung fördert, dadurch gekennzeichnet, daß sich die Elektroden (5 oder 14) und Gegenelektroden (6 oder 13) im Abstand von ≦80 mm zu den Düsenlippen von mindestens zwei Breitschlitzdüsen befinden, welche jeweils über eine Transportleitung (8 oder 15) für das Trägergas/Aerosolgemisch mit der Zerstäubereinrichtung (9) verbunden sind, wobei die Öffnungen der Breitschlitzdüsen auf gegenüberliegende Oberflächen des flächenhaften Substrats gerichtet sind, und daß die Elektroden (5 oder 14) und Gegenelektroden (6 oder 13) gemeinsam einen Spalt bilden, der höher ist als die Dicke des zu behandelnden Substrats, auf dessen beide gegenüberliegenden Oberflächen im Spalt ohne direkten oder indirekten Kontakt mit den Elektroden (5 oder 14) und Gegenelektroden (6 oder 13) das Trägergas/Aerosolgemisch einwirkt.

11. Anordnung nach Anspruch 10, dadurch gekennzeichnet, daß die Elektroden (5 oder 14) und/oder Gegenelektroden (6 oder 13) mit der jeweiligen Breitschlitzdüse einen integralen Bestandteil bilden.

12. Anordnung nach einem der Ansprüche 10 und 11, dadurch gekennzeichnet, daß zur beidseitigen Vorbehandlung des Substrats mehrere Koronaentladungseinrichtungen hintereinander angeordnet sind.

13. Anordnung nach einem der Ansprüche 10 bis 12, dadurch gekennzeichnet, daß zur Vorbehandlung von Substraten aus elektrisch leitfähigem Material die spannungsführenden Elektroden (5 oder 14) mit dielektrischem Material isoliert sind.

## Claims

1. A process for the surface pretreatment of a web-shaped or plate-shaped substrate (1) by means of an electric corona discharge which takes place in the corona discharge zone between the voltage carrying electrodes (5 or 14) and grounded counter electrode (6 or 13), the substrate passing this corona discharge zone, whereby an aerosol, obtained by atomizing a liquid, is introduced into the corona discharge zone by means of air stream or gas stream (8 or 15), wherein the aerosol, introduced via a slot die, is present on both sides of the substrate in the corona discharge zone, and the surface treatment of the substrate by means of corona discharge takes place simultaneously on both sides, and the distance between the slot dies and the electrode or counter electrode does not exceed 80 mm. In this way, corona discharge and aerosol application takes place simultaneously.

2. The process as claimed in claim 1, wherein several electrodes and counter electrodes are present and the aerosol introduced creeps along the lines of electric flux from electrodes and counter electrodes towards the substrate, and the aerosol is applied on both surfaces of the substrate.

3. The process as claimed in claim 1, wherein the electrode and the counter electrode are integrated components of the slot dies.

4. The process as claimed in claim 3, wherein the aerosols are introduced directly from the slot die into the corona discharge zone and are kept within this zone.

5. The process as claimed in claims 1 to 4, wherein the atomized liquid consists of droplets having an average size of less than 5, in particular less than 3 micrometers, which have preferably been produced by atomization of the liquid with ultrasound.

6. The process as claimed in claims 1 to 5, wherein different aerosols, resulting from atomization of different liquids and preferably of ultrosound atomization, are simultaneously blown onto the opposite surfaces of the substrate to be treated in the corona discharge zone.

7. The process as claimed in any of claims 1 to 6, wherein at least one of said surfaces of the substrate to be treated is subjected to a plurality of corona discharges in sequence, with identical or different aerosols (15 and 16), preferably resulting from ultrasound atomization of liquids, being blown into the corona discharge zone.

8. The process as claimed in any of claims 1 to 7, wherein air and/or gas or a mixture of gas is used to carry the aerosols into the corona discharge zone.

9. The process as claimed in any of claims 1 to 8, wherein the corona electrodes (5 or 14) are coupled with a high frequency alternating current of 0.1 to 10 amps at a voltage of 5 to 100 kV, preferably 5 to 30 kV, and a frequency of 3 to 100 kHz, preferably 8 to 32 kHz.

10. Arrangement of a surface pretreatment of a plate-shaped or web-shaped substrate by means of electric corona discharge, comprising a corona discharge device consisting of a generator (7), of electrodes (5 or 14), to which a high frequency alternating current of high voltage can be applied by said generator, as well as of grounded counter electrodes (6 or 13), arranged at a distance from said high voltage electrodes, of an atomizer device (9) for the atomization of liquid into a suspendable aerosol which is connected to the corona discharge device via a transport line (8 of 15) for the aerosol, and of a blower (10), which can be regulated in the rate of throughput and which is connected to said atomizer device (9) and conveys the carrier gas for the aerosol through the atomizer device (9) and the transport line (8 or 15) into the corona discharge device, wherein the electrodes (5 or 14) and the counter electrodes (6 or 13) are situated at a distance of ≦80 mm from the nozzle lips of at least two slot dies, which are each connected to the atomizer device (9) via a transport line (8 or 15) for the carrier gas/aerosol mixture, the openings of the slot dies being directed at opposite surfaces of the sheet-like substrate, and the electrodes (5 or 14) and the counter electrodes (6 or 13) together form a gap which is higher than the thickness of the substrate to be treated, on both opposite surfaces of which the carrier gas/aerosol mixture acts in the gap without direct or indirect contact with the electrodes and counter electrodes.

11. Arrangement as claimed in claim 10, wherein the electrodes (5 or 14) and/or the counter electrodes (6 to 13) form an integral component part with the respective slot die.

12. Arrangement as claimed in any of claims 10 and 11, wherein a plurality of corona discharge devices are arranged one behing another for the treatment of the substrate on both sides.

13. Arrangement as claimed in any of claims 10 to 12, wherein the high voltage electrodes (5 or 14) are insulated with dielectric material for the pretreatment of substrates of electrically conductive material.

## Revendications

1. Procédé pour le traitement préparatoire de la surface d'un substrat (1) en forme de bande ou de plaque au moyen d'une décharge électrique à effet corona, ayant lieu dans la zone de décharge à effet corona, qui se trouve entre des électrodes sous tension (5 ou 14) et une contre-électrode mise à la terre (6 ou 13), que le substrat traverse, dans lequel un aérosol est produit en pulvérisant un liquide et est transporté vers la zone de décharge au moyen d'un courant de gaz ou d'air (8 ou 15), caractérisé en ce que l'aérosol délivré par une buse à fente large est présent sur deux surfaces opposées du substrat dans la zone de décharge à effet corona, en ce que le traitement de la surface du substrat par décharge à effet corona a lieu simultanément pour les deux surfaces et en ce que la distance entre la buse à fente large et l'électrode et respectivement la contre-électrode ne dépasse par 80 mm de manière que la décharge à effet corona ait lieu simultanément avec l'alimentation de l'aérosol.

2. Procédé selon la revendication 1, caractérisé en ce qu'il existe plusieurs électrodes et contre-électrodes, et l'aérosol délivré se déplace le long des lignes de champ, qui à partir des électrodes et des contre-électrodes s'étendent dans une direction vers le substrat, et l'aérosol est déposé sur les deux surfaces du substrat.

3. Procédé selon la revendication 1, caractérisé en ce que l'électrode et la contre-électrode font partie intégrante des buses.

4. Procédé selon la revendication 3, caractérisé en ce que les aérosols sortant de la buse parviennent directement à la zone de décharge à effet corona et sont retenus dans cette zone.

5. Procédé selon les revendications 1 à 4, caractérisé en ce que le liquide pulvérisé est formé de gouttelettes d'une taille moyenne de moins de 5 micromètres, en particulier de moins de 3 micromètres, qui sont produites de préférence par pulvérisation du liquide au moyen d'ultrasons.

6. Procédé selon les revendications 1 à 5, caractérisé en ce que sur les surfaces opposées du substrat à traiter dans la zone de décharge à effet corona sont simultanément soufflés des aérosols différents qui résultent de la pulvérisation de différents liquides, de préférence par pulvérisation au moyen d'ultrasons.

7. Procédé selon une des revendications 1 à 6, caractérisé en ce que au moins une des surfaces du substrat à traiter est exposée à plusieurs décharges successives à effet corona et en ce qu'on insuffle dans les zones de décharge à effet corona des mêmes aérosols ou des aérosols différents (15 et 16) qui résultent de préférence de la pulvérisation de liquides au moyen d'ultrasons.

8. Procédé selon une des revendications 1 à 7, caractérisé en ce qu'on utilise de l'air et/ou des gaz ou des mélanges de gaz pour le transport de l'aérosol à la zone de décharge à effet corona.

9. Procédé selon une des revendications 1 à 8, caractérisé en ce qu'un courant alternatif à haute fréquence de 0,1 à 10 A sous une tension de 5 à 100 KV, de préférence de 5 à 30 KV, et à une fréquence de 3 à 100 KHz, de préférence de 8 à 32 KHz est appliqué aux électrodes corona (5 ou 14).

10. Dispositif pour le traitement préparatoire de la surface d'un substrat en forme de bande ou de plaque au moyen d'une décharge électrique à effet corona comprenant un dispositif de décharge à effet corona, formé d'un générateur (7), d'électrodes (5 ou 14), qui peuvent être chargées à partir du générateur (7) par un courant alternatif à haute fréquence sous haute tension ainsi que de contre-électrodes (6 ou 13) disposées à distance des électrodes et mises à la terre, d'un dispositif pulvérisateur (9) pour pulvériser du liquide en vue de former un aérosol en suspension, qui est lié au dispositif de décharge à effet corona par une conduite de transport (8 ou 15) pour l'aérosol, et une soufflante (10) dont le débit peut être réglé, qui est raccordée au dispositif pulvérisateur (9) et qui propulse le gaz porteur pour l'aérosol à travers le dispositif pulvérisateur (9) et la conduite de transport (8 ou 15) au dispositif de décharge à effet corona, caractérisé en ce que les électrodes (5 ou 14) et les contre-électrodes (6 ou 13) sont disposées à une distance de moins de 80 mm par rapport aux becs de buse de au moins deux buses à fente large, qui sont raccordées au dispositif pulvérisateur (9), chacune par une conduite de transport (8 ou 15) pour le mélange gaz porteur/aérosol, les orifices des buses à fente large étant tournés vers les surfaces opposées du substrat plan, et en ce que les électrodes (5 ou 14) et les contre-électrodes (6 ou 13) en coopérant forment une fente qui est plus haute que l'épaisseur du substrat à traiter, le mélange gaz porteur/mélange d'aérosols agissant sur les deux surfaces opposées du substrat qui sont hors de contact direct ou indirect avec les électrodes (5 ou 14) et les contre-électrodes (6 ou 13),

11. Dispositif selon la revendication 10, caractérisé en ce que les électrodes (5 ou 14) et/ou les contre-électrodes (6 ou 13) font partie intégrante de la buse à fente large correspondante.

12. Dispositif selon une des revendications 10 et 11, caractérisé en ce que plusieurs dispositifs de décharge à effet corona sont disposés successivement pour le traitement préparatoire des deux côtés.

13. Dispositif selon une des revendications 10 à 12, caractérisé en ce que pour le traitement préparatoire de substrats d'un matériau conducteur électrique les électrodes sous tension sont isolées par un matériau diélectrique.
